(19) Europäisches Patentamt
European Patent Office
Office européen des brevets

(11) EP 4 497 793 A1

(12) EUROPEAN PATENT APPLICATION
published in accordance with Art. 153(4) EPC

(43) Date of publication:
**29.01.2025 Bulletin 2025/05**

(21) Application number: **23775301.7**

(22) Date of filing: **22.03.2023**

(51) International Patent Classification (IPC):
***C09D 183/04*** (2006.01) ***C09J 7/40*** (2018.01)
***C08G 77/20*** (2006.01) ***C08G 77/12*** (2006.01)
***C08L 83/06*** (2006.01) ***C08K 5/56*** (2006.01)

(52) Cooperative Patent Classification (CPC):
**C08G 77/12; C08G 77/20; C08K 5/56; C08L 83/06; C09D 183/04; C09J 7/40**

(86) International application number:
**PCT/KR2023/003797**

(87) International publication number:
**WO 2023/182805 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022 KR 20220035335**

(71) Applicant: **LG Chem, Ltd.**
**Yeongdeungpo-gu**
**Seoul 07336 (KR)**

(72) Inventors:
- **PARK, Jun Hyoung**
  **Daejeon 34122 (KR)**
- **KIM, Hyun Cheol**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) RELEASE COMPOSITION

(57) The present application provides a release composition, a release layer, a release film, and a pressure-sensitive adhesive film. The release composition of the present application has excellent curability, and thus can be stably cured to form a release layer. When the release layer has been formed, the present application can provide a release composition allowing to exhibit a stable residual adhesion rate even if the release layer is repeatedly applied to a pressure-sensitive adhesive layer or the like. The release layer of the present application can maintain desired release characteristics even if it is maintained at room temperature and a high temperature for a long time. In addition, the release layer can stably maintain a balance of high-speed and low-speed peeling forces.

EP 4 497 793 A1

## Description

## Technical Field

Cross-Reference with related Applications

This application claims priority based on Korean Patent Application No. 10-2022-0035335 filed on March 22, 2022, the disclosure of which is incorporated herein by reference in its entirety.

Technical Field

The present application relates to a release composition, a release layer, a release film, and a pressure-sensitive adhesive film.

## Background Art

Release films are utilized for a use protecting a pressure-sensitive adhesive surface or adhesive surface, a use of a carrier, and a use of a coating base material or the like. For example, so-called light or medium-thin release films can be applied for protection of optically clear adhesives (OCAs). In addition, the release film can be utilized as a carrier role of tapes, and the like, or as a coating base material of a multi-layer ceramic capacitor (MLCC), and the like.
For example, Patent Document 1 discloses a release sheet having a release layer (peeling layer) formed of a release agent composition (peeling composition) comprising a polyolefin, an isocyanate compound, and a polyolefin polyol.
In addition to the method disclosed in Patent Document 1, the release layer of the release film can also be formed using a silicone-based compound.
However, the release layer formed using the silicone-based compound has a problem that it is not cured well or has a low residual adhesion rate compared to the release layer formed using a non-silicone-based compound. In addition, such a release layer usually does not have a high bonding force with a base film, and when it attached to the base film for a long time, the pressure-sensitive adhesive force tends to increase.
Therefore, it is an important task to maintain the release peeling characteristics of the release layer even when it is maintained at room temperature and a high temperature for a long time while ensuring appropriate curability and high residual adhesion rates.
In addition, the release film is required to have a relatively low peel force when peeling off a protective film at a high speed (hereinafter, referred to as a high-speed peel force) for use of a product or assembly of other products. On the other hand, the peel force when peeling at a slow speed (hereinafter, referred to as a low-speed peel force) is required to be relatively high.
If the release film does not have an appropriate low-speed peel force, a quality problem may occur, and if it does not have an appropriate high-speed peel force, a problem that an adherend is damaged upon peeling may occur. Therefore, it is an important task for the release film to have a balance between high-speed and low-speed peel forces.
(Patent Document 0001) Japanese Laid-Open Patent Publication No. 2011-52207

## Disclosure

## Technical Problem

The present application provides a release composition, a release layer, a release film, and a pressure-sensitive adhesive film.
The present application is intended to provide a release composition capable of forming a release layer, wherein it has excellent curability, thereby being stably cured.
When the release layer has been formed, the present application is intended to provide a release composition allowing to exhibit a stable residual adhesion rate even if the release layer is repeatedly applied to a pressure-sensitive adhesive layer or the like.
The present application is intended to provide a release layer capable of maintaining desired release characteristics even if it is maintained at room temperature and a high temperature for a long time.
In addition, the present application is intended to provide a release layer capable of stably maintaining a balance between high-speed and low-speed peel forces.

**Technical Solution**

Among the physical properties mentioned in this specification, when the measurement temperature affects the relevant physical property, the relevant physical property is a physical property measured at room temperature, unless otherwise specified.

The term room temperature is a natural temperature without artificially heating and cooling, which may mean, for example, any one temperature in a range of 10°C to 30°C, or a temperature of about 27°C or less while being about 15°C or more, about 18°C or more, about 20°C or more, or about 23°C or more, or a temperature of about 25°C or so.

Unless otherwise specified, the unit of temperature in this specification is °C.

Among the physical properties mentioned in this application, when the measurement pressure affects the relevant physical property, the relevant physical property is a physical property measured at normal pressure, unless otherwise specified.

In this specification, the term normal pressure is a natural pressure without being artificially pressurized or depressurized, which may mean, for example, any one pressure in a range of 0.9 atm to 1.2 atm or any one pressure in a range of about 740 mmHg to 780 mmHg.

The term relative humidity as used in the present application is expressed as a percentage (%) of the ratio of the amount of water vapor contained in the current air of a unit volume to the saturated vapor pressure that the air of the unit volume can contain at the maximum, which can be expressed in RH%. Among the physical properties mentioned in this application, when the relative humidity affects the physical property, the relevant physical property is a physical property measured in a humid environment (about 30 RH% to 70 RH%), unless otherwise specified.

The term 'a to b' as used in the present application means 'within the range between a and b while including a and b'. For example, the fact that includes a to b parts by weight has the same meaning as included in the range of a to b parts by weight.

In this specification, the terms weight average molecular weight (Mw) and number average molecular weight (Mn)

are physical properties measured using GPC (Gel permeation chromatography), and the term polydispersity index (PDI)

is a value (Mw/Mn) obtained by dividing the weight average molecular weight (Mw) by the number average molecular weight (Mn).

The unit of weight average molecular weight (Mw) and number average molecular weight (Mn) mentioned in this specification

is g/mol. Specific methods for measuring the weight average molecular weight (Mw), number average molecular weight (Mn), and polydispersity index are summarized in the Examples section.

In this specification, unless otherwise specified, the term alkyl group or alkoxy group may be a linear or branched alkyl group or alkoxy group with 1 to 20 carbon atoms, or 1 to 16 carbon atoms, or 1 to 12 carbon atoms, or 1 to 8 carbon atoms, or 1 to 6 carbon atoms, or 1 to 4 carbon atomsor may be a cyclic alkyl group or alkoxy group with 3 to 20 carbon atoms, or 3 to 16 carbon atoms, or 3 to 12 carbon atoms, or 3 to 8 carbon atoms, or 3 to 6 carbon atoms. Here, the cyclic alkyl group or alkoxy group also includes an alkyl group or alkoxy group having only a ring structure, and an alkyl group or alkoxy group containing a ring structure. For example, both cyclohexyl group and methyl cyclohexyl group correspond to cyclic alkyl groups.

In this specification, unless otherwise specified, the term alkenyl group may be a linear or branched acyclic alkenyl group with 2 to 20 carbon atoms, or 2 to 16 carbon atoms, or 2 to 12 carbon atoms, or 2 to 8 carbon atoms, or 2 to 6 carbon atoms, or 2 to 4 carbon atoms or may be a cyclic alkenyl group with 3 to 20 carbon atoms, or 3 to 16 carbon atoms, or 3 to 12 carbon atoms, or 3 to 8 carbon atoms, or 3 to 6 carbon atoms. Here, the category of the cyclic alkenyl group also includes an alkenyl group having only a ring structure, and an alkenyl group containing a ring structure.

In this specification, unless otherwise specified, the term alkynyl group may be a linear or branched acyclic alkynyl group with 2 to 20 carbon atoms, or 2 to 16 carbon atoms, or 2 to 12 carbon atoms, or 2 to 8 carbon atoms, or 2 to 6 carbon atoms, or 2 to 4 carbon atoms or may be a cyclic alkynyl group or with 3 to 20 carbon atoms, or 3 to 16 carbon atoms, or 3 to 12 carbon atoms, or 3 to 8 carbon atoms, or 3 to 6 carbon atoms. Here, if the alkynyl group with a ring structure is included, it corresponds to a cyclic alkynyl group.

The alkyl group, alkoxy group, alkenyl group, and alkynyl group may also be substituted by any one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

In this specification, the term aryl group means a substituent formed by removing one hydrogen from an aromatic hydrocarbon ring compound, where the aromatic hydrocarbon ring compound may be a monocyclic or polycyclic ring compound. The number of carbon atoms of the aryl group is not particularly limited, but unless otherwise specified, the aryl

group may be an aryl group with 6 to 20 carbon atoms, 6 to 18 carbon atoms, or 2 to 15 carbon atoms.

The aryl group may be exemplified by a phenyl group, a phenylethyl group, a phenylpropyl group, a benzyl group, a tolyl group, a xylyl group, or a naphthyl group, and the like, but is not limited thereto.

The aryl group may also be optionally substituted with one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

In this specification, the term monovalent hydrocarbon group means a monovalent substituent derived from a hydrocarbon (an organic compound consisting of carbon and hydrogen). The carbon number of such a monovalent hydrocarbon group may be in a range of 1 to 20, 1 to 16, 1 to 12, 1 to 8, or 1 to 4. An example of the monovalent hydrocarbon group includes an alkyl group, an alkenyl group, an alkynyl group, or an aryl group. The alkyl group, alkenyl group, alkynyl group, or aryl group may each be the alkyl group, alkenyl group, alkynyl group, or aryl group as specifically described at the opening of this specification.

The present application relates to a release composition. The term release composition means a composition capable of forming a release layer, and in this instance, the meaning of release layer is as known in the industry.

The release composition may be a curable composition, and in this case, the composition may form the release layer before or after curing.

The release composition of the present application may comprise a polyorganosiloxane component.

As is known, the term polyorganosiloxane means a polymer comprising chains formed by a siloxane bond (Si-O-Si). The polyorganosiloxane mentioned in this specification may be a monomolecular polyorganosiloxane, or a mixture of bimolecular or higher polyorganosiloxanes. The polyorganosiloxane is a polymer compound, and in some cases, only a monomolecular polymer is produced in a polymerization process for forming a polymer compound, but in some cases, a bimolecular or higher polymer is produced, so that the meaning of the term polyorganosiloxane also includes a mixture of bimolecular or higher polyorganosiloxanes.

The polyorganosiloxane is usually formed by comprising one or more siloxane units selected from the group consisting of so-called M unit, D unit, T unit and Q unit.

In this specification, the M unit is a so-called monofunctional siloxane unit (i.e., a siloxane unit with a structure in which the silicon atom is linked to one oxygen atom), which may be usually expressed as ($R_3SiO_{1/2}$); the D unit is a so-called bifunctional siloxane unit (i.e., a siloxane unit with a structure in which the silicon atom is linked to two oxygen atoms), which may be usually expressed as ($R_2SiO_{2/2}$); the T unit is a so-called trifunctional siloxane unit (i.e., a siloxane unit with a structure in which the silicon atom is linked to three oxygen atoms), which may be usually expressed as ($RSiO_{3/2}$); and the Q unit is a so-called tetrafunctional siloxane unit (i.e., a siloxane unit with a structure in which the silicon atom is linked to four oxygen atoms), which may be usually expressed as ($SiO_{4/2}$).

The polyorganosiloxane of the present application contains specific siloxane units, which may accordingly form the release layer to be intended in the present application.

As described above, the polyorganosiloxane may be a monomolecular polyorganosiloxane, or a mixture of bimolecular or higher polyorganosiloxanes. For example, the monomolecular polyorganosiloxane or the mixture of bimolecular or higher polyorganosiloxanes may have an average unit to be described below.

The polyorganosiloxane component of the present application may be a polyorganosiloxane having a siloxane unit of Formula 1 below, a siloxane unit of Formula 2 below, and a siloxane unit of Formula 3 below.

[Formula 1] $(R^1{}_2SiO_{2/2})$

[Formula 2] $(R^1R^2SiO_{2/2})$

[Formula 3] $(R^3{}_2SiO_{2/2})$

In Formulas 1 to 3, $R^1$ may be an alkyl group, $R^2$ may be an alkenyl group, and $R^3$ may be an aryl group. Specific types of the alkyl group, alkenyl group, and aryl group included in Formulas 1 to 3 are as described at the opening of this specification.

The ratio of the total mole number of the siloxane units of Formulas 1 to 3 above may be adjusted based on the total mole number of all siloxane units included in the polyorganosiloxane of the present application. For example, the lower limit of the ratio of the total mole number of the siloxane units of Formulas 1 to 3 (based on the total mole number of all siloxane units) may be 85 mol%, 86 mol%, 87 mol%, 88 mol%, 89 mol%, 90 mol%, 91 mol%, 92 mol%, 93 mol%, 94 mol%, 95 mol%, 96 mol%, 97 mol%, 98 mol%, or 99 mol% or so, and the upper limit thereof may be 100 mol%, or 99.9 mol% or so. The ratio may be more than or equal to, or more than any one of the above-described lower limits, or may be less than or equal to, or less than any one of the above-described upper limits, or may be within a range of less than or equal to, or less

than any one of the above-described upper limits while being more than or equal to, or more than any one of the above-described lower limits. Under such a ratio, it is possible to secure appropriate curability, and it is possible to form a release layer with desired release characteristics.

In the polyorganosiloxane of the present application, the ratios between siloxane units of Formulas 1 to 3 may also be adjusted.

For example, the lower limit of the ratio of the mole number of the siloxane unit of Formula 1 to the mole number of the siloxane unit of Formula 2 included in the polyorganosiloxane may be 0.5, 1, 5, 10, 15, 20, 25, 30, 35, 40, 45, 50, 55, 60, 65, 70, 75, 80, 85 or 90 or so, and the upper limit thereof may be 2,000, 1,500, 1,000, 500, 400, 300, 200, 100, 90, 80, 70, 60, 50, 40, 30, or 20 or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. Under such a ratio, it is possible to secure appropriate curability, and it is possible to form a release layer with desired release characteristics.

The lower limit of the ratio of the mole number of the siloxane unit of Formula 1 to the mole number of the siloxane unit of Formula 3 included in the polyorganosiloxane of the present application may be 0.5, 1, 5, 10, 12, 14, 16, 18, 20, 25, 30, 40, 50, 60, 70, 80, 90, 100, 110, 120, or 130 or so, and the upper limit thereof may be 2,000, 1000, 500, 300, 200, 150, 140, 130, 120, 110, 100, 90, 80, 70, 60, 50, 40, 30, or 20 or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. Under such a ratio, it is possible to secure appropriate curability, and it is possible to form a release layer with desired release characteristics. The polyorganosiloxane may have additional other siloxane units if it contains the siloxane units of Formulas 1 to 3 above.

For example, the polyorganosiloxane of the present application may further contain one or more siloxane units selected from the group consisting of a siloxane unit of Formula 4 below and a siloxane unit of Formula 5 below.

[Formula 4] $(R^1{}_3SiO_{1/2})$

[Formula 5] $(R^2R^1{}_2SiO_{1/2})$

In Formulas 4 and 5, $R^1$ may be an alkyl group, and $R^2$ may be an alkenyl group.

The specific types of the alkyl group and alkenyl group of Formulas 4 and 5 are as described at the opening of this specification.

The siloxane units of Formulas 4 and 5 are each a so-called M unit, and such a unit may be bound to the ends and/or side chains of the polymer chains of the polyorganosiloxane, thereby existing. In one example, the polyorganosiloxane may include only one of the siloxane units of Formulas 4 and 5 above, or may include both the foregoing.

For example, such a polyorganosiloxane of the present application may have an average unit of Formula 6 below.

[Formula 6] $R^1{}_aR^2{}_bR^3{}_cR^4{}_dSiO_{(4-a-b-c-d)/2}$

In Formula 6, $R^1$ may be an alkyl group, $R^2$ may be an alkenyl group, $R^3$ may be an aryl group, and $R^4$ may be an alkoxy group, a hydroxy group, or a monovalent hydrocarbon group, without being limited thereto.

The specific types of the alkyl group, alkenyl group, aryl group, alkoxy group, and monovalent hydrocarbon group of Formula 6 are as described at the opening of this specification.

In this specification, the term average unit of the polyorganosiloxane means a formula expressed by converting the mole number of the functional group and the linker (linker linking the silicon atom to the silicon atom) contained in the polyorganosiloxane based on the matter that the mole number of silicon atoms contained in the polyorganosiloxane is assumed as 1 mole. Such an average unit may be for a monomolecular polyorganosiloxane, or may also be for a mixture of bimolecular or higher polyorgaonsiloxanes. When the average unit is for the mixture of bimolecular or higher polyorganosiloxanes, the ratio of other functional groups or linkers is calculated by assuming that the number of all silicon atoms included in the mixture is 1 mole.

In Formula 6, $R^1$, $R^2$, $R^3$ and $R^4$ represented on the left side of the silicon atom (Si) represent functional groups directly linked to the silicon atom, and the oxygen atom (O) on the right side represents a linker linking the silicon atom to the silicon atom.

In Formula 6, a is the mole number of the functional group $R^1$ converted by assuming that the mole number of silicon atoms contained in the compound is 1 mole; in Formula 6, b is the mole number of the functional group $R^2$ converted by assuming that the mole number of silicon atoms contained in the compound is 1 mole; in Formula 6, c is the mole number of the functional group $R^3$ converted by assuming that the mole number of silicon atoms contained in the compound is 1 mole; and in Formula 6, d is the mole number of the functional group $R^4$ converted by assuming that the mole number of

silicon atoms contained in the compound is 1 mole.

In addition, (4-a-b-c-d) in Formula 6 is the mole number of oxygen atoms (O), which are the linkers, converted by assuming that the mole number of silicon atoms contained in the compound is 1 mole. In the case of the linker oxygen atom (O), two silicon atoms are bonded thereto, so that the mole number is divided by 2 to be expressed.

In Formula 6, the lower limit of a may be 0.6, 0.7, 0.8, 0.9, 1, 1.1, 1.2, 1.3, 1.4, 1.5, 1.6, 1.7, 1.8, or 1.9 or so, and the upper limit thereof may be 6, 5.5, 5, 4.5, 4, 3.5, 3, 2.5, or 2 or so. The a may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

In Formula 6, the lower limit of b may be 0.001, 0.005, 0.01, 0.02, 0.04, or 0.05 or so, and the upper limit thereof may be 0.7, 0.6, 0.5, 0.4, 0.2, 0.1, 0.05, 0.03, or 0.02 or so. The b may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

In Formula 6, the lower limit of c may be 0.001, 0.01, 0.03, 0.05, 0.07, or 0.09 or so, and the upper limit thereof may be 2, 1.8, 1.6, 1.4, 1.2, 1, 0.8, 0.5, 0.2, 0.1, or 0.05 or so. The c may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

In Formula 6, the upper limit of d may be 1, 0.9, 0.8, 0.7, 0.6, 0.5, 0.4, 0.3, 0.2, 0.1, 0.05, 0.01, or 0.001 or so, and the lower limit thereof may be 0. The d may be less than or equal to, or less than any one of the above-described upper limits, or may be within a range of less than or equal to, or less than any one of the above-described upper limits while being more than or equal to, or more than any one of the above-described lower limits.

Through the application of the polyorganosiloxane having the above average unit, it is possible to provide a release composition forming a release layer with desired properties after curing while having appropriate curability.

The polyorganosiloxane may have a substantially linear structure. For example, the polyorganosiloxane may consist substantially of only M units and D units, or may include T and/or Q units together with M units and D units, but may have a structure that the ratio of the T and/or Q units is below a certain level.

For example, the upper limit of the ratio of the total mole number of trifunctional siloxane units (T units) and tetrafunctional siloxane units (Q units) to the total number of siloxane units included in the polyorganosiloxane (100 X (mole number of T unit + mole number of Q unit)/mole number of all siloxane units) may be 10 mol%, 9 mol%, 8 mol%, 7 mol%, 6 mol%, 4 mol%, 3 mol%, 2 mol%, 1 mol%, 0.5 mol%, or 0.1 mol% or so, and the lower limit thereof may be 0 mol%. The ratio may be less than or equal to, or less than any one of the above-described upper limits, or may be within a range of less than or equal to, or less than any one of the above-described upper limits while being more than or equal to, or more than any one of the above-described lower limits. Under such a ratio, it is possible to secure appropriate curability, and it is possible to form a release layer with desired release characteristics.

The polyorganosiloxane may have a certain level of weight average molecular weight. For example, the lower limit of the weight average molecular weight may be 20,000 g/mol, 50,000 g/mol, 100,000 g/mol, 150,000 g/mol, 200,000 g/mol, 250,000 g/mol, 300,000 g/mol, 350,000 g/ mol, 400,000 g/mol, 450,000 g/mol, 500,000 g/mol, or 550,000 g/mol or so, and the upper limit thereof may be 2,000,000 g/mol, 1,500,000 g/mol, 1,000,000 g/mol, 900,000 g/mol, 800,000 g/mol, 700,000 g/mol, or 650,000 g/mol or so. The weight average molecular weight may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The polyorganosiloxane of the present application may have a certain level of polydispersity index. The polydispersity index is a value (Mw/Mn) obtained by dividing the weight average molecular weight (Mw) of the compound the number average molecular weight (Mn).

The lower limit of the polydispersity index (PDI) may be 1, 1.25, 1.5, 1.75, or 1.8 or so, and the upper limit thereof may be 5, 3.5, 3, 2.5, 2.2, or 2 or so. The polydispersity index may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. When the polyorganosiloxane component has a polydispersity index within the above range, it is possible to secure excellent release characteristics and smooth film formatting properties.

The lower limit of the content of the polyorganosiloxane component in the release composition may be 0.5 wt%, 1 wt%, 3 wt%, 5 wt%, 7 wt%, 8 wt%, 10 wt%, 20 wt%, 30 wt%, 40 wt%, 50 wt%, 60 wt%, 70 wt%, or 75 wt% or so, and the upper limit thereof may be 95 wt%, 90 wt%, 85 wt%, 80 wt%, 75 wt%, 70 wt%, 65 wt%, 60 wt%, 55 wt%, 50 wt%, 45 wt%, 40 wt%, 35 wt%, 30 wt%, 25 wt%, 20 wt%, 15 wt%, or 10 wt% or so. The ratio may be more than or equal to, or more than any one of

the above-described lower limits, or may be less than or equal to, or less than any one of the above-described upper limits, or may be within a range of less than or equal to, or less than any one of the above-described upper limits while being more than or equal to, or more than any one of the above-described lower limits. The ratio is a ratio based on solid content, and therefore, when the release composition comprises a solvent, it is a ratio to the total weight of the release composition excluding the weight of the solvent. By including the polyorganosiloxane within the above-mentioned range, it is possible to provide a release composition having excellent curability and forming a release layer with desired physical properties.

Such a polyorganosiloxane may be produced by a known method. In general, the polyorganosiloxane may be produced by a method of polymerizing an alkoxysilane compound or a partial condensate thereof, or ring-opening polymerizing a cyclic siloxane compound, and such a known method may be equally applied in the present application.

If the release composition of the present application comprises the polyorganosiloxane, it may also further comprise other components.

For example, the release composition may comprise a curable silicone resin component in addition to the polyorganosiloxane.

The term curable silicone resin component may be a silicone resin component capable of curing. The term curing means a phenomenon in which the viscosity of the release composition increases or the release composition hardens through a chemical or physical reaction, or interaction, as is known.

Such a curable silicone resin component may include a compound having the functional group capable of curing. However, the scope of curable silicone resin components or curable compounds mentioned in this specification does not include polyorganosiloxanes having siloxane units of Formulas 1 to 3 above.

For example, the curable silicone resin component may be an addition-curing silicone resin component to be described below, where such an addition-curing silicone resin component may include a polyorganosiloxane having an alkenyl group such as a vinyl group. However, since the polyorganosiloxane having siloxane units of Formulas 1 to 3 above also has the alkenyl group, the polyorganosiloxane can also be strictly classified as the curable silicone resin component, but for convenience of explanation, the component or compound mentioned in this specification as the curable silicone resin component does not include the polyorganosiloxanes having siloxane units of Formulas 1 to 3 above. However, such an explanation method does not mean that the polyorganosiloxanes having siloxane units of Formulas 1 to 3 above have no curability.

In this specification, the polyorganosiloxane having siloxane units of Formulas 1 to 3 above may be referred to as an additive polyorganosiloxane to distinguish it from polyorganosiloxane included in the curable silicone resin component.

Meanwhile, the curable silicone resin component may be composed of one polyorganosiloxane, or may be composed of a mixture of two or more polyorganosiloxanes.

In one example, the silicone resin component of the release composition may be a so-called addition-curing type component. Such a resin component may comprise, for example, a polyorganosiloxane containing siloxane units having an alkenyl group bonded to a silicon atom (hereinafter, may be referred to as a first polyorganosiloxane or a first polyorganosiloxane component).

The first polyorganosiloxane or the first polyorganosiloxane component may have, for example, an average unit of Formula 7 below. Here, the meaning of the average unit is the same as described above.

[Formula 7] $$P^2_cQ^2_dSiO_{(4-c-d)/2}$$

In Formula 7, $P^2$ may be an alkenyl group, and $Q^2$ may be an alkoxy group, a hydroxy group, or a monovalent hydrocarbon group.

In Formula 7, c and d are arbitrary numbers.

In Formula 7, the specific types of alkenyl group, alkoxy group, and monovalent hydrocarbon group are as described at the opening of this specification.

In one example, the lower limit of c may be 0.0001, 0.0005, 0.001, 0.002, 0.005, or 0.01 or so, and the upper limit may be 0.1, 0.09, 0.08, 0.07, 0.06, 0.05, 0.04, 0.03, 0.02, 0.01, 0.009, 0.008, 0.007, 0.006, 0.005, 0.004, or 0.003 or so. The c may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

In one example, the lower limit of d may be 0.5, 1, 1.5, 1.7, or 1.9 or so, and the upper limit thereof may be 5, 4, 3.5, 3, 2.5, or 2 or so. The d may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The first polyorganosiloxane may contain an alkenyl group bonded to a silicon atom, and the ratio of the alkenyl group may be adjusted based on the mole number of organic groups bonded to all silicon atoms included in the

polyorganosiloxane. For example, the lower limit of the ratio of the mole number of the silicon-bonded alkenyl group based on the mole number of all silicon atom-bonded organic groups included in the first polyorganosiloxane may be 0.01 mol%, 0.05 mol%, 0.1 mol%, 0.15 mol%, 0.2 mol%, 0.25 mol%, 0.3 mol%, 0.35 mol%, 0.4 mol%, 0.45 mol% or 0.5 mol%, 0.6 mol%, 0.7 mol%, 0.8 mol%, 0.9 mol%, or 1 mol% or so, and the upper limit thereof may be 1.5 mol%, 1.4 mol%, 1.3 mol%, 1.2 mol%, 1.1 mol%, 0.9 mol%, 0.8 mol%, 0.7 mol% or 0.6 mol%, 0.5 mol%, 0.4 mol%, 0.3 mol%, 0.2 mol%, or 0.1 mol% or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. Under such a ratio, it is possible to secure appropriate curability, and it is possible to form a release layer with desired release characteristics.

Such an alkenyl group may be included in a siloxane unit of a specific structure in the polyorganosiloxane. For example, the first polyorganosiloxane may contain one or more siloxane units selected from the group consisting of a siloxane unit of Formula 9 below and a siloxane unit of Formula 10 below.

[Formula 9] $ViR^3_2SiO_{1/2}$

[Formula 10] $ViR^3SiO_{2/2}$

In Formulas 9 and 10, Vi may be an alkenyl group, and $R^3$ may be a hydroxy group, an alkoxy group, or a monovalent hydrocarbon group. The specific types of alkenyl group, alkoxy group, and monovalent hydrocarbon group above are as described in Formula 7.

The lower limit of the ratio of the siloxane unit of Formula 9 above based on all the siloxane units in the first polyorganosiloxane component may be 0.001 mol%, 0.005 mol%, 0.01 mol%, 0.02 mol%, 0.03 mol%, 0.04 mol%, 0.05 mol%, 0.06 mol%, 0.07 mol%, 0.08 mol%, 0.09 mol%, or 0.095 mol% or so, and the upper limit thereof may be 0.5 mol%, 0.4 mol%, 0.3 mol%, 0.2 mol%, 0.1 mol%, 0.09 mol%, 0.08 mol%, or 0.07 mol% or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The lower limit of the ratio of the siloxane unit of Formula 10 above based on all the siloxane units in the first polyorganosiloxane component may be 0.01 mol%, 0.05 mol%, 0.1 mol%, 0.15 mol%, 0.2 mol%, 0.3 mol%, 0.4 mol%, 0.5 mol%, 0.6 mol%, 0.7 mol%, 0.8 mol%, or 0.9 mol% or so, and the upper limit thereof may be 10 mol%, 9 mol%, 8 mol%, 7 mol%, 6 mol%, 5 mol%, 4 mol%, 3 mol%, 2 mol%, or 1 mol% or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The first polyorganosiloxane component may contain both siloxane units of Formulas 9 and 10 above. In this case, the lower limit of the molar ratio of the siloxane unit of Formula 10 above to the siloxane unit of Formula 9 above may be 0.1, 0.5, 1, 1.5, 2, 2.5, 3, 4, 5, 6, 7, 8, 9, or 9.5 or so, and the upper limit thereof may be 20, 18, 16, 14, 12, 11, 10, 9, 8, 7, 6, 5, 4, or 3 or so. It may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The lower limit of the number of silicon atoms contained in the first polyorganosiloxane component may be 500, 1,500, 2,000, 2,500, or 3,000 or so, and the upper limit thereof may be 10,000, 5,000, 4,000, 3,500, 3,000, 2,500, or 2,100 or so. The number of silicon atoms may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The first polyorganosiloxane component may have a substantially linear structure. In this case, the polyorganosiloxane may be substantially composed of only M units (monofunctional siloxane units) and D units (bifunctional siloxane units), or may contain T units (trifunctional siloxane units) and/or Q units (tetrafunctional siloxane units together with M units (monofunctional siloxane units) and D units (bifunctional siloxane units), but may have a structure that the ratio of the T units (trifunctional siloxane units) and/or the Q units (tetrafunctional siloxane units) is below a certain level.

For example, in the first polyorganosiloxane component, the upper limit of the ratio of the total number of moles of the Tand Q units to the number of moles of all siloxane units contained in the polyorganosiloxane (100 X (number of moles of T unit + number of moles of Q unit)/number of moles of all siloxane units) may be 10 mol%, 9 mol%, 8 mol%, 7 mol%, 6 mol%, 5 mol%, 4 mol%, 3 mol%, 2 mol%, 1 mol%, or 0.5 mol% or so, and the lower limit thereof may be 0 mol%. The ratio may be more than or equal to, or more than any one of the above-described lower limits, or may be less than or equal to, or

less than any one of the above-described upper limits, or may be within a range of less than or equal to, or less than any one of the above-described upper limits while being more than or equal to, or more than any one of the above-described lower limits.

The lower limit of the weight average molecular weight of the first polyorganosiloxane component may be 100,000 g/mol, 150,000 g/mol, 200,000 g/mol, 250,000 g/mol, or 300,000 g/mol or so, and the upper limit thereof may be 1,000,000 g/mol. 950,000 g/mol, 900,000 g/mol, 850,000 g/mol, 800,000 g/mol, 750,000 g/mol, 700,000 g/mol, 650,000 g/mol, 600,000 g/mol, 550,000 g/mol, 500,000 g/ mol, 450,000 g/mol, or 400,000 g/mol or so. The weight average molecular weight may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. As the first polyorganosiloxane has a weight average molecular weight within the above-mentioned range, an appropriate viscosity can be secured to exert excellent coating properties.

The lower limit of the polydispersity index (PDI) of the first polyorganosiloxane component may be 1, 1.25, or 1.5 or so, and the upper limit thereof may be 5, 3.5, or 2.5 or so. The polydispersity index may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The curable silicone resin component may comprise a polyorganosiloxane having an average unit of Formula 8 below (hereinafter, may be referred to as a second polyorganosiloxane or a second polyorganosiloxane component) together with the above-described first polyorganosiloxane. The meaning of the average unit is as described above. The average unit may be for the monomolecular polyorganosiloxane, or may be for the mixture of bimolecular or higher polyorganosiloxanes.

[Formula 8] $H_eQ^3_fSiO_{(4-e-f)/2}$

In Formula 8, $Q^3$ may be an alkoxy group, a hydroxy group, or a monovalent hydrocarbon group.

In Formula 8, e and f are arbitrary numbers.

Specific examples of the alkoxy group or monovalent hydrocarbon group of Formula 8 above are the same as the case of Formula 7.

In Formula 8, the lower limit of e may be 0.01, 0.05, 0.1, 0.15, 0.2, 0.25, 0.3, 0.35, 0.4, 0.45, 0.5, 0.55, or 0.6 or so, and the upper limit thereof may be 2, 1.5, 1, 0.9, 0.8, 0.7, 0.65, 0.6, 0.5, 0.4, 0.39, 0.38, 0.37, 0.36, or 0.35 or so. The e may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

In Formula 8, the lower limit off may be 0.5, 1, 1.1, 1.2, 1.3, 1.4, 1.5, or 1.6 or so, and the upper limit thereof may be 4, 3.5, 3, 2.5, 2, 1.9, 1.8, 1.7, 1.6, or 1.5 or so. The f may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The second polyorganosiloxane may include hydrogen atoms bonded to silicon atoms, and the ratio of the hydrogen atoms may be adjusted based on the mole number of organic groups bonded to all silicon atoms included in the polyorganosiloxane. For example, the lower limit of the ratio of the mole number of the silicon atom-bonded hydrogen atoms based on the mole number of all silicon atom-bonded organic groups contained in the second polyorganosiloxane may be 1 mol%, 5 mol%, 10 mol%, 15 mol%, 20 mol%, 25 mol%, or 30 mol% or so, and the upper limit thereof may be 85 mol%, 80 mol%, 75 mol%, 70 mol%, 65 mol%, 60 mol%, 55 mol%, 50 mol%, 45 mol%, 40 mol%, 35 mol%, 30 mol%, 25 mol%, or 20 mol% or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. Under such a ratio, it is possible to secure appropriate curability, and it is possible to form a release layer with desired release characteristics.

Such a hydrogen atom may be included in siloxane units of a specific structure in the polyorganosiloxane.

For example, the hydrogen atom bonded to the silicon atom may be present at least in the siloxane unit of Formula 11 below:

[Formula 11] $HR^4SiO_{2/2}$

In Formula 11, $R^4$ may be a hydroxy group, an alkoxy group, or a monovalent hydrocarbon group. The specific

types of the alkoxy group and monovalent hydrocarbon group of Formula 11 are the same as the case of Formula 8.

The lower limit of the ratio of the mole number of the siloxane units of Formula 11 based on the total mole number of siloxane units containing silicon atom-bonded hydrogen atoms among all siloxane units contained in the second polyorganosiloxane component may be 85 mol%, 90 mol%, 95 mol%, 96 mol%, 97 mol%, 98 mol%, 99 mol%, or 99.5 mol% or so, and the upper limit thereof may be 100 mol% or so. The ratio may be more than or equal to, or more than any one of the above-described lower limits, or may be within a range of less than or equal to, or less than any one of the above-described upper limits while being more than or equal to, or more than any one of the above-described lower limits.

The lower limit of the ratio of the siloxane units of Formula 11 above based on all siloxane units in the second polyorganosiloxane component may be 10 mol%, 15 mol%, 20 mol%, 25 mol%, 30 mol%, 35 mol%, 40 mol%, 45 mol%, 50 mol%, 55 mol%, or 60 mol% or so, and the upper limit thereof may be 85 mol%, 80 mol%, 75 mol%, 70 mol%, 65 mol%, 60 mol%, 55 mol%, or 50 mol% or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The lower limit of the number of silicon atoms contained in the second polyorganosiloxane component may be 20, 25, 30, 35, 40, 45, 50, 55, 60, 65, 70, 75, 80, 85, or 90 or so, and the upper limit thereof may be 1,000, 950, 900, 850, 800, 750, 700, 650, 600, 550, 500, 450, 400, 350, 300, 250, 200, 150, 100, 95, 90, 85, 80, 75, 70, 65, 60, 55, or 50 or so. The number of silicon atoms may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The second polyorganosiloxane component may have a substantially linear structure. In this case, the polyorganosiloxane may be substantially composed of only M units and D units, or may include T and/or Q units together with M units and D units, but may have a structure that the ratio of the T and/or Q units is below a certain level.

For example, in the second polyorganosiloxane component, the upper limit of the ratio of the total mole number of the T and Q units to the mole number of all siloxane units included in the polyorganosiloxane (100 X (mole number of T units + mole number of Q units)/mole number of all siloxane units) may be 10 mol%, 9 mol%, 8 mol%, 7 mol%, 6 mol%, 5 mol%, 4 mol%, 3 mol%, 2 mol%, 1 mol%, or 0.5 mol% or so, and the lower limit thereof may be 0 mol%. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The lower limit of the weight average molecular weight of the second polyorganosiloxane may be 1,000 g/mol, 2,000 g/mol, 3,000 g/mol, 4,000 g/mol, 5,000 g/mol, 6,000 g/mol, 7,000 g/mol, 8,000 g/mol, or 9,000 g/mol or so, and the upper limit thereof may be 100,000 g/mol, 90,000 g/mol, 80,000 g/mol, 70,000 g/mol, 60,000 g/mol, 50,000 g/mol, 45,000 g/mol, 40,000 g/mol, 30,000 g/mol, 20,000 g/mol, 15,000 g/mol, or 12,000 g/mol or so. The weight average molecular weight may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. As the second polyorganosiloxane has a weight average molecular weight within the above-mentioned range, it is possible to secure excellent curing properties.

The lower limit of the polydispersity index of the second polyorganosiloxane may be 1, 1.25, or 1.5 or so, and the upper limit thereof may be 5, 3.5, or 2.5 or so. The polydispersity index may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The lower limit of the first polyorganosiloxane component in the curable silicone resin component or the release composition may be 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, 85 wt%, or 90 wt% or so, and the upper limit thereof may be 98 wt%, wt%, 96 wt%, 94 wt%, 92 wt%, 90 wt%, 85 wt%, 80 wt%, 75 wt%, 70 wt%, 65 wt%, 60 wt%, 55 wt%, 50 wt%, 45 wt%, 40 wt%, 35 wt%, or 30 wt% or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. The ratio is a ratio based on solid content, and therefore, when the release composition comprises a solvent, it is a ratio to the total weight of the release composition excluding the weight of the solvent. By comprising the first polyorganosiloxane within the above-described range, it is possible to secure an appropriate level of release peel force and an excellent residual adhesion rate of the release layer to be described below.

The lower limit of parts by weight of the second polyorganosiloxane in the curable silicone resin component or the release composition relative to 100 parts by weight of the first polyorganosiloxane may be 0.1 parts by weight, 0.25 parts by

weight, 0.5 parts by weight, 0.75 parts by weight, 1 part by weight, 1.25 parts by weight, 1.5 parts by weight, 1.75 parts by weight, or 2 parts by weight or so, and the upper limit thereof may be 10 parts by weight, 8 parts by weight, 6 parts by weight, 4 parts by weight or 3.5 parts by weight, 3 parts by weight, or 2.5 parts by weight or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. When the second polyorganosiloxane is included within the above range, the crosslinking density can be improved to secure a cured product with excellent durability.

In the release composition of the present application, the lower limit of parts by weight of the additive polyorganosiloxane relative to 100 parts by weight of the curable silicone resin component may be 1 part by weight, 5 parts by weight, 10 parts by weight, 50 parts by weight, 100 parts by weight, 200 parts by weight, 300 parts by weight, or 350 parts by weight or so, and the upper limit thereof may be 1000 parts by weight, 900 parts by weight, 800 parts by weight, 700 parts by weight, 600 parts by weight, 500 parts by weight, 400 parts by weight, 300 parts by weight, and 200 parts by weight, 100 parts by weight, 50 parts by weight, 40 parts by weight, 30 parts by weight, 20 parts by weight, or 10 parts by weight or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. By controlling the ratio of the additive polyorganosiloxane, it is possible to form the desired release layer more effectively.

The release composition of the present application may further comprise a catalyst, if necessary, in consideration of curability. As the catalyst, a suitable known catalyst may be used in consideration of the curing type of the curable silicone resin component. For example, when the curable silicone resin component is an addition curing type, a metal catalyst may be used as the catalyst. The metal catalyst may include one or more selected from the group consisting of aluminum, bismuth, lead, mercury, tin, zinc, platinum, silver, and zirconium as a central metal element. As the metal catalyst, for example, bis[1,3-bis(2-ethenyl)-1,1,3,3-tetramethyldisiloxane]platinum (CAS No. 81032-58-8), dibutyltin dilaurate, or dimethyltin diacetate, and the like may be used, but is not particularly limited thereto. For example, as the catalyst, a catalyst known in the industry as a so-called addition curing type catalyst may be used.

The content of the catalyst is not particularly limited if it is included in a catalytic amount. For example, the lower limit of parts by weight of the catalyst relative to 100 parts by weight of the curable silicone resin component may be 0.1 parts by weight, 0.5 parts by weight, 1 part by weight, 1.5 parts by weight, 2 parts by weight, 2.5 parts by weight, or 3 parts by weight or so, and the upper limit thereof may be 10 parts by weight, 9 parts by weight, 8 parts by weight, 7 parts by weight, 6 parts by weight, 5 parts by weight, 4 parts by weight, or 3 parts by weight or so. It may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. By comprising the catalyst within the above-described range, the cured product formation reaction can be effectively promoted while reducing side reactions.

The release composition according to one example of the present application may further comprise an organic solvent. Considering the constitution of the release composition, the solvent may be suitably an organic solvent. The organic solvent is not particularly limited if it is commonly used in the industry, and tetrahydrofuran, methyl ethyl ketone, toluene, and heptane, and the like, or a mixed solvent of the foregoing may be used. In addition, their mixing ratio is not particularly limited, and they may be appropriately formulated as needed.

The amount of the solvent may be adjusted as needed, which is not particularly limited.

The present application also relates to a release layer. The release layer may comprise the above-described release composition or a cured product thereof.

Therefore, the release layer may comprise the additive polyorganosiloxane, may further comprise the curable silicone resin component, and may optionally comprise a reactant of the components. The release layer may be formed, for example, by curing the release composition according to one example of the present application as described above. The method of performing this curing is not particularly limited, and an appropriate curing method may be adopted depending on the type of curable resin component.

The release layer can effectively satisfy the desired physical properties in the present application by comprising the release composition or a cured product thereof.

That is, the release layer can stably maintain the desired release characteristics even after being maintained for a long period of time, regardless of any temperature. Also, the release layer can stably maintain the balance between so-called high-speed and low-speed peel forces. In addition, the release layer can stably maintain the release characteristics even when attachment and peeling of a pressure-sensitive adhesive or the like are performed multiple times. The release composition can have excellent curing properties, and thus can be stably cured to form the above-described release layer.

For example, the release layer may satisfy physical properties according to one or more of the following equations 1 to 5. That is, the release layer may satisfy the physical property according to any one of the following equations

1 to 5, may satisfy two or more physical properties thereof simultaneously, or may satisfy all the physical properties according to the following equations 1 to 5.

For example, the release layer may have a peel force aging variation rate ($A_{R1}$) according to Equation 1 below within a predetermined range. For example, the upper limit of the peel force aging variation rate ($A_{R1}$) may be 18%, 17%, 16%, 15%, 14%, 13%, 12%, 11%, 10%, 9%, 8%, 7%, 6%, 5%, 4%, 3%, 2%, 1%, 0.9%, 0.8%, 0.7%, or 0.6% or so, and the lower limit thereof may be 0% or so. The peel force aging variation rate ($A_{R1}$) may be less than or equal to, or less than any one of the above-described upper limits, or may be within a range of less than or equal to, or less than any one of the above-described upper limits while being more than or equal to, or more than any one of the above-described lower limits. The present application can provide a release layer having appropriate levels of release peel force and residual adhesion rate as the peel force aging variation rate satisfies the above range.

[Equation 1]

$$A_{R1}=100X|A_7- A_1|/A_1$$

In Equation 1, $A_1$ may be a release peel force measured while maintaining a state where a pressure-sensitive adhesive layer is attached to the release layer at 25°C for 24 hours and then peeling the pressure-sensitive adhesive layer from the release layer at a peel angle of 180 degrees and a peel rate of 0.3 m/min, and at 25°C, and $A_7$ may be a release peel force measured while maintaining a state where a pressure-sensitive adhesive layer is attached to the release layer at 25°C for 168 hours and then peeling the pressure-sensitive adhesive layer from the release layer at a peel angle of 180 degrees and a peel rate of 0.3 m/min, and at 25°C.

In Equation 1, $|A_7-A_1|$ means the absolute value of the difference between $A_7$ and $A_1$.

The specific measurement method of the peel force aging variation rate ($A_{R1}$) in Equation 1 (including the measurement method of release peel forces $A_7$ and $A_1$) is described in the Example section.

The release layer of the present application can exhibit an appropriate level of release peel force even after a long period of time, as $A_{R1}$ of Equation 1 above satisfies the above range.

The upper limit of the release peel force $A_7$ in Equation 1 may be 500 gf/inch, 400 gf/inch, 300 gf/inch, 200 gf/inch, 100 gf/inch, 50 gf/inch, 30 gf/inch, 20 gf/ inch, 15 gf/inch, or 10 gf/inch or so, and the lower limit thereof may be 1 gf/inch, or 5 gf/inch or so. The release peel force $A_7$ may be less than or equal to, or less than any one of the above-described upper limits, or may be within a range of less than or equal to, or less than any one of the above-described upper limits while being more than or equal to, or more than any one of the above-described lower limits. As the release layer of the present application has a release peel force $A_7$ satisfying the above range, it can exhibit desired release properties in various applications.

The release layer of the present application may have a peel force aging variation rate ($A_{R2}$) according to Equation 2 below within a predetermined range. For example, the lower limit of the peel force aging variation rate ($A_{R2}$) may be 0%, or 1% or so, and the upper limit thereof may be 20%, 19%, 18%, 17%, 16%, 15%, 14%, 13%, 12%, 11%, 10%, 9%, 8%, 7%, 6%, 5%, 4%, 3%, 2%, 1%, or 0.5% or so. The peel force aging variation rate may be less than or equal to, or less than any one of the above-described upper limits, or may be within a range of less than or equal to, or less than any one of the above-described upper limits while being more than or equal to, or more than any one of the above-described lower limits. In the present application, the peel force aging variation rate satisfies the above range, so that it is possible to stably maintain the desired release property even when the release layer is maintained at a high temperature for a long period of time.

[Equation 2]

$$A_{R2}=100X|A_{60℃,7}- A_{60°C,1}|/A_{60°C,1}$$

In Equation 2, $A_{60°C,1}$ may be a release peel force measured while maintaining a state where a pressure-sensitive adhesive layer is attached to the release layer at 60°C for 24 hours and then peeling the pressure-sensitive adhesive layer from the release layer at a peel angle of 180 degrees and a peel rate of 0.3 m/min, and at 25°C, and $A_{60°C,7}$ may be a release peel force measured while maintaining a state where a pressure-sensitive adhesive layer is attached to the release layer at 60°C for 168 hours and then peeling the pressure-sensitive adhesive layer from the release layer at a peel angle of 180 degrees and a peel rate of 0.3 m/min, and at 25°C.

In Equation 2, $|A_{60°C,7}- A_{60°C,1}|$ means the absolute value of the difference between $A_{60°C,7}$ and $A_{60°C,1}$.

The specific measurement method of the peel force aging variation rate ($A_{R2}$) according to Equation 2 above (including the measurement method of release peel forces $A_{60°C,7}$ and $A_{60°C,1}$) is described in the Examples section of this

specification.

The upper limit of the release peel force $A_{60°C,1}$ in Equation 2 above may be 500 gf/inch, 400 gf/inch, 300 gf/inch, 200 gf/inch, 100 gf/inch, 50 gf/inch, 30 gf/inch, 20 gf/inch, or 10 gf/inch or so, and the lower limit thereof may be 1 gf/inch, or 5 gf/inch or so. The release peel force may be less than or equal to, or less than any one of the above-described upper limits, or may be within a range of less than or equal to, or less than any one of the above-described upper limits while being more than or equal to, or more than any one of the above-described lower limits. Since the present application has a release peel force ($A_{60°C, 1}$) satisfying the above range, it is possible to provide a release layer with appropriate levels of release peel force and residual adhesion rate even at high temperatures.

The upper limit of the release peel force $A_{60°C, 7}$ in Equation 2 above may be 500 gf/inch, 400 gf/inch, 300 gf/inch, 200 gf/inch, 100 gf/inch, 50 gf/inch, 30 gf/inch, 20 gf/inch, or 10 gf/inch or so, and the lower limit thereof may be 1 gf/inch, or 5 gf/inch or so. The release peel force may be less than or equal to, or less than any one of the above-described upper limits, or may be within a range of less than or equal to, or less than any one of the above-described upper limits while being more than or equal to, or more than any one of the above-described lower limits. By satisfying the above range, the present application can provide a release layer having appropriate levels of release peel force and residual adhesion rate even over time at high temperatures.

The upper limit of the peel force aging variation rate ($A_{R3}$) at room temperature (about 25°C) - 60°C according to Equation 3 below in the release layer of the present application may be 30%, 29%, 28%, 27%, 26%, 25%, 20%, 15%, 10%, 9%, 8%, 7%, 6%, 5%, 4%, 3%, 2%, or 1% or so, and the lower limit thereof may be 0%, or 0.1% or so. The peel force aging variation rate at room temperature (about 25°C) - 60°C may be less than or equal to, or less than any one of the above-described upper limits, or may be within a range of less than or equal to, or less than any one of the above-described upper limits while being more than or equal to, or more than any one of the above-described lower limits. By satisfying the above range, the present application can stably maintain the desired release characteristics even when the release layer is maintained for a long period of time in an environment with temperature changes.

[Equation 3]

$$A_{R3}=100X|A_{60℃,7}- A_1|/A_1$$

In Equation 3, $A_1$ may be a release peel force measured while maintaining a state where a pressure-sensitive adhesive layer is attached to the release layer at 25°C for 24 hours and then peeling the pressure-sensitive adhesive layer from the release layer at a peel angle of 180 degrees and a peel rate of 0.3 m/min, and at 25°C, and $A_{60°C,7}$ may be a release peel force measured while maintaining a state where a pressure-sensitive adhesive layer is attached to the release layer at 60°C for 168 hours and then peeling the pressure-sensitive adhesive layer from the release layer at a peel angle of 180 degrees and a peel rate of 0.3 m/min, and at 25°C.

In Equation 3, $|A_{60°C,7}- A_1|$ means the absolute value of the difference between $A_{60°C,7}$ and $A_1$.

The specific measurement method of the peel force aging variation rate ($A_{R3}$) at room temperature (about 25°C) - 60°C according to Equation 3 above (measurement method of release peel forces $A_{60°C, 7}$ and $A_1$) is described in the Examples section of this specification.

The release layer of the present application may have a peel force ratio ($A_{R4}$) depending on the peel rate according to Equation 4 below within a predetermined range. For example, the lower limit of the peel force ratio ($A_{R4}$) depending on the peel rate may be 50%, 100%, 150%, 155%, 160%, 165%, 170%, 175%, 180%, or 185% or so, and the upper limit thereof may be 600%, 590%, 580%, 570%, 560%, 550%, 540%, 530% or 520%, 500%, 450%, 400%, 350%, 300%, 250%, 200%, or 190% or so. The peel force ratio depending on the peel rate may be less than or equal to, or less than any one of the above-described upper limits, or may be within a range of less than or equal to, or less than any one of the above-described upper limits while being more than or equal to, or more than any one of the above-described lower limits. By satisfying the above range, the present application can provide a release layer that exhibits a relatively high peel force upon relatively low-speed peeling, and exhibits a relatively low peel force upon relatively high-speed peeling. The release layer can stably exhibit the balance of peel force depending on the peel rate even under high temperature conditions.

[Equation 4]

$$A_{R4}=100XA_H/A_L$$

In Equation 4, $A_H$ may be a release peel force measured while maintaining a state where a pressure-sensitive adhesive layer is attached to the release layer at 60°C for 24 hours and then peeling the pressure-sensitive adhesive layer

from the release layer at a peel angle of 180 degrees and a peel rate of 30 m/min, and at 25°C, and $A_L$ may be a release peel force measured while maintaining a state where a pressure-sensitive adhesive layer is attached to the release layer at 60°C for 24 hours and then peeling the pressure-sensitive adhesive layer from the release layer at a peel angle of 180 degrees and a peel rate of 0.3 m/min, and at 25°C.

The specific measurement method of the peel force ratio ($A_{R4}$) depending on the peel rate according to Equation 4 above (measurement method of release peel forces $A_H$ and $A_L$) is described in the Example section of this specification.

The release layer of the present application may have a residual adhesion rate ($A_d$) according to Equation 5 below within a predetermined range. For example, the lower limit of the residual adhesion rate ($A_d$) may be 80%, 82.5%, 85%, 87.5%, or 90% or so, and the upper limit thereof may be 100%, or 99% or so. The residual adhesion rate may be more than or equal to, or more than any one of the above-described lower limits, or may be within a range of less than or equal to, or less than any one of the above-described upper limits while being more than or equal to, or more than any one of the above-described lower limits.

When the release layer according to one example of the present application has a residual adhesion rate ($A_d$) satisfying the above range, it is possible to stably maintain the release property even after the pressure-sensitive adhesive layer is attached to the release layer several times, and then peeled off.

[Equation 5]

$$\text{Residual adhesion rate } (A_d) = 100 \text{ X } A_f/A_i$$

In Equation 5, $A_i$ may be a release peel force measured while maintaining a state where a pressure-sensitive adhesive layer is attached to the release layer at 25°C for 24 hours and then peeling the pressure-sensitive adhesive layer from the release layer at a peel angle of 180 degrees and a peel rate of 0.3 m/min, and at 25°C, and $A_f$ may be a release peel force measured while maintaining a state where a pressure-sensitive adhesive layer is attached to the release layer at 25°C for 24 hours again after the $A_i$ is measured, and then peeling the pressure-sensitive adhesive layer from the release layer at a peel angle of 180 degrees and a peel rate of 0.3 m/min, and at 25°C.

The specific measurement method of the residual adhesion rate ($A_d$) in Equation 5 (method of measuring release peel forces $A_f$ and $A_i$) is described in the Example section.

In the release layer of the present application, the upper limit of the release peel force $A_i$ of Equation 5 above may be 500 gf/inch, 400 gf/inch, 300 gf/inch, 200 gf/inch, 100 gf/inch, 50 gf/inch, or 25 gf/inch or so, and the lower limit thereof may be 1 gf/inch, or 5 gf/inch or so. The release peel force may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. When the release layer according to one example of the present application has a release peel force satisfying the above range, it can be said to have appropriate levels of release peel force and residual adhesion rate.

In the release layer of the present application, the lower limit of the release peel force Af of Equation 5 above may be 1 gf/inch, or 5 gf/inch or so, and the upper limit thereof may be 500 gf/inch, 400 gf/inch, 300 gf/inch, 200 gf/inch, 100 gf/inch, 50 gf/inch, or 25 gf/inch or so. The release peel force may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

By satisfying the residual adhesion rate ($A_d$) according to Equation 5 above while having the release peel force (Af) satisfying the above range, the present application can provide a release layer having appropriate levels of release peel force and residual adhesion rate.

The present application also relates to a release film.

The release film may comprise a base film and a release layer formed on one side or both sides of the base film.

The specific details of the release layer are as described above.

The type of base film of the release film according to one example of the present application is not particularly limited. As the base film, a base film that can generally be applied to form a release film can be applied.

For example, as the base film, a PET (poly(ethylene terephthalate)) film, a PTFE (poly(tetrafluoroethylene)) film, a PP (polypropylene) film, a PE (polyethylene) film, a polyimide film, a polyamide film, a COP (cyclic olefin polymer) film, a polybutene film, a polybutadiene film, a vinyl chloride copolymer film, a polyurethane film, an ethylene-vinyl acetate film, an ethylene-propylene copolymer film, an ethylene-ethyl acrylate copolymer film, an ethylene-methyl acrylate copolymer film and/or a polyimide film, and the like may be used, but is not limited thereto.

In addition, the base film may be composed of a single layer, or may also be laminated with two or more layers, and in some cases, it may further comprise a functional layer such as an antifouling layer or an antistatic layer.

Furthermore, from the viewpoint of base material adhesiveness improvement, surface treatment such as primer treatment may also be further performed on one side or both sides of the base material.

The thickness of the base film is appropriately selected depending on the use, which is not particularly limited, and it may typically be formed to a thickness of 5 μm to 500 μm, 5 μm to 250 μm, or 5 μm to 100 μm.

The release film of the present application may be manufactured in a known manner. In one example, the release film of the present application may be manufactured by applying the release composition according to one example of the present application to one side or both sides of a base material, and then curing it to form a release layer. Here, the application method of the release composition is not particularly limited if it is commonly used in the industry, which includes, for example, knife coating, roll coating, or reverse coating, and the like. Also, the formation of the release layer may be performed after sufficiently removing bubble-causing components such as volatile components or reaction residues of the release composition. In addition, the method of curing the release composition is not particularly limited, and it may be cured through an appropriate aging process, or in an appropriate high temperature environment or light irradiation environment, as described above.

The thickness of the release layer included in the release film is not particularly limited, which may be, for example, 10 nm to 10 μm, 10 nm to 1 μm, or 10 nm to 100 nm.

In addition, the present application relates to a pressure-sensitive adhesive film.

The pressure-sensitive adhesive film according to one example of the present application may comprise the above-described release layer and a pressure-sensitive adhesive layer to which the release layer is attached. By comprising the release layer, it is possible to protect the pressure-sensitive adhesive layer until it is used.

The release layer of the pressure-sensitive adhesive film according to one example of the present application is as described above.

The pressure-sensitive adhesive forming the pressure-sensitive adhesive layer of the pressure-sensitive adhesive film according to one example of the present application is not particularly limited.

For example, as the pressure-sensitive adhesive forming the pressure-sensitive adhesive layer, one using, as a base polymer, an acrylic polymer, a silicone-based polymer, a polyester, a polyurethane, a polyamide, a polyether, or a fluorine-based or rubber-based polymer, and the like can be appropriately selected and used.

**Advantageous Effects**

The present application provides a release composition, a release layer, a release film, and a pressure-sensitive adhesive film.

The release composition of the present application has excellent curability, and thus can be stably cured to form a release layer.

When the release layer has been formed, the present application can provide a release composition allowing to exhibit a stable residual adhesion rate even if the release layer is repeatedly applied to a pressure-sensitive adhesive layer or the like.

The release layer of the present application can maintain desired release characteristics even if it is maintained at room temperature and a high temperature for a long time. In addition, the release layer can stably maintain a balance of high-speed and low-speed peeling forces.

**Mode for Invention**

Hereinafter, the present application will be described in more detail through examples and comparative examples, but the scope of the present application is not limited to the contents presented below.

1. Release peel force measurement method

A specimen was prepared by laminating a pressure-sensitive adhesive layer of a standard tape (TESA, TESA7475) having a pressure-sensitive adhesive layer on a surface of a release layer of a release film prepared with each release composition of Examples or Comparative Examples. The attachment was performed by placing the pressure-sensitive adhesive layer of the standard tape on the release layer and then reciprocating a roller with a load of 2.5 kg three times. Subsequently, the specimen was kept at room temperature (about 25°C) for 24 hours to measure a release peel force, or was kept at 60°C for 24 hours to measure a release peel force. This release peel force was measured while peeling the standard tape at a peel angle of 180 degrees and a peel rate of 0.3 m/min (low-speed peel force), or was measured while peeling the standard tape at a peel angle of 180 degrees and a peel rate of 30 m/min (high-speed peel force), using a physical property measuring device (Cheminstruments, AR-1000). The peel force was measured at room temperature (about 25°C).

2. Measurement method of room temperature peel force aging variation rate ($A_{R1}$)

For a release layer of a release film prepared with each release composition of Examples or Comparative Examples, a room temperature peel force aging variation rate ($A_{R1}$) was measured according to Equation 1 below.

[Equation 1]

$$A_{R1}=100X|A_7- A_1|/A_1$$

In Equation 1, $A_1$ is a release peel force measured after maintaining a specimen prepared by laminating a standard tape (TESA, TESA7475) to the release layer of the release film in the same manner as described in the release peel force measurement method at room temperature (about 25°C) for about 24 hours. This release peel force was measured while peeling the standard tape at a peel angle of 180 degrees and a peel rate of 0.3 m/min, and at room temperature (about 25°C), using a physical property measuring device (Cheminstruments, AR-1000). $A_7$ of Equation 1 is a release peel force measured after maintaining the specimen at room temperature (about 25°C) for 168 hours, and the release peel force was also measured while peeling the standard tape at a peel angle of 180 degrees and a peel rate of 0.3 m/min, and at room temperature (about 25°C), using a physical property measuring device (Cheminstruments, AR-1000).

3. Measurement method of 60°C peel force aging variation rate ($A_{R2}$)

For a release layer of a release film prepared with each release composition of Examples or Comparative Examples, a 60°C peel force aging variation rate ($A_{R2}$) was measured according to Equation 2 below.

[Equation 2]

$$A_{R2}=100X|A_{60°C,7}- A_{60°C,1}|/A_{60°C,1}$$

In Equation 2, $A_{60°C,1}$ is a release peel force measured after maintaining a specimen prepared by laminating a standard tape (TESA, TESA7475) to the release layer of the release film in the same manner as described in the release peel force measurement method at 60°C for 24 hours, and $A_{60°C,7}$ of Equation 2 is a release peel force measured after maintaining a specimen prepared by laminating a standard tape (TESA, TESA7475) to the release layer of the release film in the same manner as described in the release peel force measurement method at 60°C for 168 hours. The release peel force was measured while peeling the standard tape at room temperature (about 25°C) at a peel angle of 180 degrees and a peel rate of 0.3 m/min, using a physical property measuring device (Cheminstruments, AR-1000).

4. Measurement method of peel force aging variation rate ($A_{R3}$) at room temperature - 60°C

For a release layer of a release film prepared with each release composition of Examples or Comparative Examples, a peel force aging variation rate ($A_{R3}$) at room temperature - 60°C was measured according to Equation 3 below.

[Equation 3]

$$A_{R3}=100X|A_{60°C,7}- A_1|/A_1$$

In Equation 3, $A_1$ is a release peel force measured after maintaining a specimen prepared by laminating a standard tape (TESA, TESA7475) to the release layer of the release film in the same manner as described in the release peel force measurement method at room temperature (about 25°C) for about 24 hours, and $A_{60°C,7}$ is a release peel force measured after maintaining the specimen at 60°C for 168 hours. The release peel force was measured while peeling the standard tape at room temperature (about 25°C) at a peel angle of 180 degrees and a peel rate of 0.3 m/min, using a physical property measuring device (Cheminstruments, AR-1000).

5. Measurement method of peel force ratio ($A_{R4}$) depending on peel rate

For a release layer of a release film prepared with each release composition of Examples or Comparative

Examples, a peel force ratio ($A_{R4}$) depending on peel rate was measured according to Equation 4 below.

[Equation 4]

$$A_{R4}=100XA_H/A_L$$

In Equation 4, $A_H$ is a release peel force measured after maintaining a specimen prepared by laminating a standard tape (TESA, TESA7475) to the release layer of the release film in the same manner as described in the release peel force measurement method at 60°C for 24 hours. This release peel force was measured while peeling the standard tape at room temperature (about 25°C) at a peel angle of 180 degrees and a peel rate of 30 m/min using a physical property measuring device (Cheminstruments, AR-1000). In addition, $A_L$ of Equation 4 is a release peel force measured after maintaining the specimen at 60°C for 24 hours, which is a release peel force measured while peeling the tape at a peel angle of 180 degrees and a peel rate of 0.3 m/min, and at room temperature (about 25°C), using a physical property measuring device (Cheminstruments, AR-1000).

6. Residual adhesion rate ($A_d$) measurement method

For a release layer of a release film prepared with each release composition prepared in Examples or Comparative Examples, a residual adhesion rate ($A_d$) was measured according to Equation 5 below.

[Equation 5]

$$A_d=100 X A_f/A_i$$

In Equation 5, $A_i$ is a release peel force measured after maintaining a specimen prepared by laminating a standard tape (TESA, TESA7475) to the release layer of the release film in the same manner as described in the release peel force measurement method at room temperature (about 25°C) for about 24 hours, which is a release peel force measured while peeling the standard tape at a peel angle of 180 degrees and a peel rate of 0.3 m/min, and at room temperature (about 25°C), using a physical property measuring device (Cheminstruments, AR-1000). In addition, Af of Equation 5 is a release peel force measured after maintaining a specimen prepared by laminating a standard tape (TESA, TESA7475) to the same release layer of the release film after the $A_i$ is measured in the same manner as described in the release peel force measurement method at room temperature (about 25°C) for about 24 hours, which is a release peel force measured while peeling the standard tape at a peel angle of 180 degrees and a peel rate of 0.3 m/min, and at room temperature (about 25°C), using a physical property measuring device (Cheminstruments, AR-1000).

7. Method for evaluating curability of release composition

For the release layer of the release film manufactured with the release composition of Examples or Comparative Examples, the curability of the release composition was evaluated using a rub-off evaluation method. The rub-off evaluation method is an evaluation method of observing changes generated after rubbing the surface of the release layer three times with a constant load while wearing latex gloves.
Curability was evaluated based on the following criteria.

<Curability evaluation criteria>

PASS: When there is no change in the release layer after rub-off evaluation

NG: When the release layer falls off or the base film becomes cloudy after rub-off evaluation.

8. Evaluation of weight average molecular weight

A weight average molecular weight (Mw) and a polydispersity index (PDI) were measured using GPC (gel permeation chromatography). The unit of weight average molecular weight (Mw) and number average molecular weight (Mn) mentioned in this specification is g/mol.
A sample (sample to be analyzed) was placed in a 20 mL vial and diluted with THF (tetrahydrofuran) to a

concentration of about 20 mg/mL, and the standard sample for calibration and the sample to be analyzed were filtered through a syringe filter (pore size: 0.2 μm), and then the molecular weight characteristics were measured. As an analysis program, Agilent technologies' ChemStation was used, and the elution time of the sample was compared with the calibration curve to obtain the number average molecular weight (Mn) and weight average molecular weight (Mw), and then the value (Mw/Mn) obtained by dividing the weight average molecular weight (Mw) by the number average molecular weight (Mn) was taken as the polydispersity index.

<GPC measurement conditions>

Instrument: Agilent technologies' 1200 series

Column: using Agilent technologies' TL Mix. A&B

Solvent: THF

Column temperature: 40°C

Sample concentration: 20 mg/mL, 10 μl injection

Using MP: 364000, 91450, 17970, 4910, 1300 as standard sample

**Preparation Example 1.**

A polyorganosiloxane of Formula A below was prepared.

[Formula A]

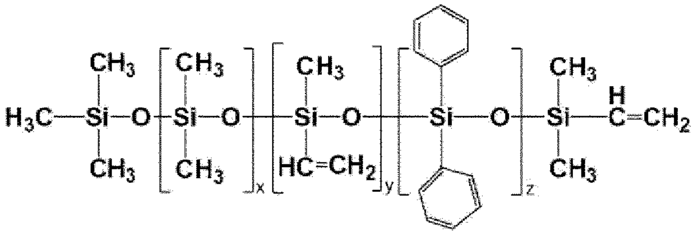

In Formula A, x is a number of about 1,000-ish, y is a number of about 60-ish, and z is a number of about 60-ish.

As monomers for forming the polyorganosiloxane, octamethylcyclotetrasiloxane (M), 1,3,5,7-tetramethyl-1,3,5,7-tetravinylcyclotetrasiloxane (V) and octaphenylcyclotetrasiloxane (P) were mixed in a weight ratio of 170:10:10 (M: V: P) (primary mixture). P4-t-butyl-phosphazene (C) and chlorodimethylvinyl silane (S) were further added to the mixture (secondary mixture). The addition was performed in a weight ratio of about 6250:2.5:1 (primary mixture: C: S).

The secondary mixture was polymerized at a temperature of about 60°C for 12 hours to prepare a polyorganosiloxane component of Formula A above. The weight average molecular weight of the polyorganosiloxane component was about 600,000 g/mol, and the polydispersity index was about 1.85 or so.

**Preparation Example 2.**

A polyorganosiloxane of Formula B below was prepared.

[Formula B]

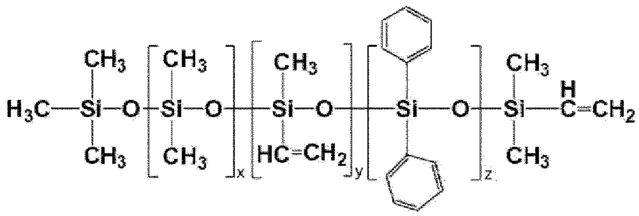

In Formula B, x is a number of about 1,000-ish, y is a number of about 60-ish, and z is a number of about 7 to 8-ish.

The preparation of the polyorganosiloxane component of Formula B above was performed in the same manner as the polyorganosiloxane component of Formula A, but in preparing the polyorganosiloxane component of Formula B, the weight ratio of octamethylcyclotetrasiloxane (M), 1,3,5,7-tetramethyl-1,3,5,7-tetravinylcyclotetrasiloxane (V) and octaphenylcyclotetrasiloxane (P) was set to 130:9:1 (M: V: P) upon preparing the primary mixture. The weight average molecular weight of the polyorganosiloxane component was about 600,000 g/mol, and the polydispersity index was about 1.85 or so.

**Preparation Example 3.**

A polyorganosiloxane of Formula C below was prepared.

[Formula C]

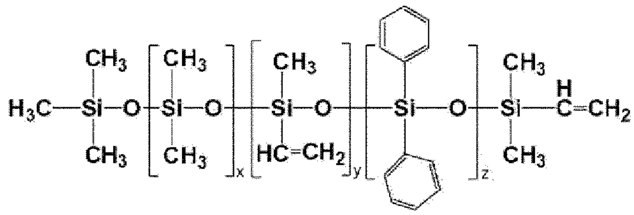

In Formula C, x is a number of about 1,000-ish, y is a number of about 11-ish, and z is a number of about 70-ish.

The polyorganosiloxane component of Formula C above was prepared in the same manner as in Preparation Example 1. However, in preparing the polyorganosiloxane component of Formula C, the weight ratio of octamethylcyclotetrasiloxane (M), 1,3,5,7-tetramethyl-1,3,5,7-tetravinylcyclotetrasiloxane (V) and octaphenylcyclotetrasiloxane (P) in the primary mixture was adjusted to 145:1:10 (M: V: P) or so. The weight average molecular weight of the polyorganosiloxane component of Formula C above was about 600,000 g/mol, and the polydispersity index was about 1.85 or so.

**Example 1.**

A polyorganosiloxane of Formula E below (KS-847H, Shinetsu Silicone) (weight average molecular weight about 350,000 g/mol), a polyorganosiloxane of Formula F below (X-92-122, Shinetsu Silicone) (weight average molecular weight about 10,000 g/mol), a platinum catalyst (PL-50L, Shinetsu Silicone) (C) and the polyorganosiloxane component (A) of Preparation Example 1 were mixed in a weight ratio of 5:0.1:0.15:0.5 (E: F: C: A), and dispersed in a solvent to prepare a release composition. As the solvent (S), one obtained by mixing THF (tetrahydrofuran), MEK (methylethyl ketone), toluene (T), and n-heptane (H) in a weight ratio of 50:30:10:10 (THF: MEK: T: H) was used.

[Formula E]

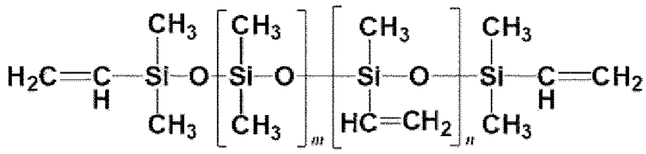

In Formula E, m is a number of about 1,500-ish, and n is a number of 12 to 13-ish.

[Formula F]

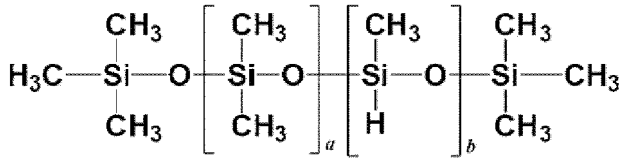

In Formula F, a is a number of 34 to 36-ish, and b is a number of 34 to 36-ish.

**Example 2.**

The polyorganosiloxane of Formula E above (KS-847H, Shinetsu Silicone) (weight average molecular weight about 350,000 g/mol), the polyorganosiloxane of Formula F above (X-92-122, Shinetsu Silicone) (weight average molecular weight about 10,000 g/mol), the platinum catalyst (PL-50L, Shinetsu Silicone) (C) and the polyorganosiloxane component (A) of Preparation Example 1 above were mixed in a weight ratio of 5:0.1:0.15:2.5 (E: F: C: A), and dispersed in a solvent to prepare a release composition. As the solvent (S), the same solvent as in Example 1 was used.

**Example 3.**

The polyorganosiloxane of Formula E above (KS-847H, Shinetsu Silicone) (weight average molecular weight about 350,000 g/mol), the polyorganosiloxane of Formula F above (X-92-122, Shinetsu Silicone) (weight average molecular weight about 10,000 g/mol), the platinum catalyst (PL-50L, Shinetsu Silicone) (C) and the polyorganosiloxane component (A) of Preparation Example 1 above were mixed in a weight ratio of 5:0.1:0.15:12.5 (E: F: C: A), and dispersed in a solvent to prepare a release composition. As the solvent (S), the same solvent as in Example 1 was used.

**Example 4.**

Instead of the polyorganosiloxane component of Preparation Example 1, the polyorganosiloxane component (B) of Preparation Example 2 was used. The polyorganosiloxane of Formula E above (KS-847H, Shinetsu Silicone) (weight average molecular weight about 350,000 g/mol), the polyorganosiloxane of Formula F above (X-92-122, Shinetsu Silicone) (weight average molecular weight about 10,000 g/mol), the platinum catalyst (PL-50L, Shinetsu Silicone) (C) and the polyorganosiloxane component (B) of Preparation Example 2 above were mixed in a weight ratio of 5:0.1:0.15:0.5 (E: F: C: B), and dispersed in a solvent to prepare a release composition. As the solvent (S), the same solvent as in Example 1 was used.

**Example 5.**

The polyorganosiloxane of Formula E above (KS-847H, Shinetsu Silicone) (weight average molecular weight about 350,000 g/mol), the polyorganosiloxane of Formula F above (X-92-122, Shinetsu Silicone) (weight average molecular weight about 10,000 g/mol), the platinum catalyst (PL-50L, Shinetsu Silicone) (C) and the polyorganosiloxane component (B) of Preparation Example 2 above were mixed in a weight ratio of 5:0.1:0.15:2.5 (E: F: C: B), and dispersed in a solvent to prepare a release composition. As the solvent (S), the same solvent as in Example 1 was used.

**Example 6.**

The polyorganosiloxane of Formula E above (KS-847H, Shinetsu Silicone) (weight average molecular weight about 350,000 g/mol), the polyorganosiloxane of Formula F above (X-92-122, Shinetsu Silicone) (weight average molecular weight about 10,000 g/mol), the platinum catalyst (PL-50L, Shinetsu Silicone) (C) and the polyorganosiloxane component (B) of Preparation Example 2 above were mixed in a weight ratio of 5:0.1:0.15:10 (E: F: C: B), and dispersed in a solvent to prepare a release composition. As the solvent (S), the same solvent as in Example 1 was used.

**Example 7**.

The polyorganosiloxane of Formula E above (KS-847H, Shinetsu Silicone) (weight average molecular weight about 350,000 g/mol), the polyorganosiloxane of Formula F above (X-92-122, Shinetsu Silicone) (weight average molecular weight about 10,000 g/mol), the platinum catalyst (PL-50L, Shinetsu Silicone) (C) and the polyorganosiloxane

component (B) of Preparation Example 2 above were mixed in a weight ratio of 5:0.1:0.15:12.5 (E: F: C: B), and dispersed in a solvent to prepare a release composition. As the solvent (S), the same solvent as in Example 1 was used.

**Example 8.**

The polyorganosiloxane of Formula E above (KS-847H, Shinetsu Silicone) (weight average molecular weight about 350,000 g/mol), the polyorganosiloxane of Formula F above (X-92-122, Shinetsu Silicone) (weight average molecular weight about 10,000 g/mol), the platinum catalyst (PL-50L, Shinetsu Silicone) (C) and the polyorganosiloxane component (B) of Preparation Example 2 above were mixed in a weight ratio of 5:0.1:0.15:20 (E: F: C: B), and dispersed in a solvent to prepare a release composition. As the solvent (S), the same solvent as in Example 1 was used.

**Example 9.**

Instead of the polyorganosiloxane component of Preparation Example 1, the polyorganosiloxane component (D) of Preparation Example 3 was used. The polyorganosiloxane of Formula E above (KS-847H, Shinetsu Silicone) (weight average molecular weight about 350,000 g/mol), the polyorganosiloxane of Formula F above (X-92-122, Shinetsu Silicone) (weight average molecular weight about 10,000 g/mol), the platinum catalyst (PL-50L, Shinetsu Silicone) (C) and the polyorganosiloxane component (D) of Preparation Example 3 above were mixed in a weight ratio of 5:0.1:0.15:2.5 (E: F: C: D), and dispersed in a solvent to prepare a release composition. As the solvent (S), the same solvent as in Example 1 was used.

**Example 10.**

The polyorganosiloxane of Formula E above (KS-847H, Shinetsu Silicone) (weight average molecular weight about 350,000 g/mol), the polyorganosiloxane of Formula F above (X-92-122, Shinetsu Silicone) (weight average molecular weight about 10,000 g/mol), the platinum catalyst (PL-50L, Shinetsu Silicone) (C) and the polyorganosiloxane component (D) of Preparation Example 3 above were mixed in a weight ratio of 5:0.1:0.15:12.5 (E: F: C: D), and dispersed in a solvent to prepare a release composition. As the solvent (S), the same solvent as in Example 1 was used.

**Comparative Example 1.**

The polyorganosiloxane of Formula E above (KS-847H, Shinetsu Silicone) (weight average molecular weight about 350,000 g/mol), the polyorganosiloxane of Formula F above (X-92-122, Shinetsu Silicone) (weight average molecular weight about 10,000 g/mol), and the platinum catalyst (PL-50L, Shinetsu Silicone) (C) were mixed in a weight ratio of 5:0.1:0.15 (E: F: C), and dispersed in a solvent to prepare a release composition. As the solvent (S), the same solvent as in Example 1 was used.

A release film was manufactured using each release composition of Examples or Comparative Examples above. The release film was manufactured by applying the release composition of Examples or Comparative Examples to one side of the base film using a Meyer bar, and then curing the applied release composition by holding it at 150°C for 3 minutes to form a release layer.

The thickness of the release layer was about 200 nm to 300 nm or so, and a PET (polyethylene terephthalate) film with a thickness of about 50 μm or so was used as the base film.

The results of the test data measured in Examples and Comparative Examples were summarized in Tables 1 and 2 below. The units of the release peel forces in Tables 1 and 2 below are all gf/inch.

[Table 1]

| Classification | | Related to room temperature release peel force | | | Related to 60°C release peel force | | | $A_{R3}$(%) |
|---|---|---|---|---|---|---|---|---|
| | | $A_1$ | $A_7$ | $A_{R1}$ (%) | $A_{60°C,1}$ | $A_{60°C,7}$ | $A_{R2}$ (%) | |
| Example | 1 | 24.4 | 27 | 10.7 | 25.1 | 26.3 | 4.78 | 7.79 |
| | 2 | 18.1 | 18.2 | 0.55 | 17.8 | 18.4 | 3.37 | 1.66 |
| | 3 | 14.9 | 16.2 | 8.72 | 15.7 | 16.9 | 7.64 | 13.4 |
| | 4 | 17.4 | 18.2 | 4.60 | 16.8 | 19.9 | 18.5 | 14.4 |
| | 5 | 13 | 13.3 | 2.31 | 13.8 | 14.2 | 2.90 | 9.23 |
| | 6 | 9.7 | 10.3 | 6.19 | 10.8 | 12.1 | 12.0 | 24.7 |
| | 7 | 8 | 8.5 | 6.25 | 8.2 | 9.2 | 12.2 | 15 |
| | 8 | 28.7 | 28.8 | 0.35 | 28.8 | 27.3 | 5.21 | 13.3 |
| | 9 | 24.6 | 25.9 | 5.28 | 24.5 | 24.4 | 0.41 | 0.81 |
| | 10 | 13.4 | 13.8 | 2.99 | 13.8 | 13.6 | 1.45 | 1.49 |
| Comparative Example 1 | | 26.6 | 32 | 20.3 | 27.6 | 27.2 | 1.45 | 2.26 |

[Table 2]

| Classification | | Related to peel force depending on peel rate | | | Residual adhesion rate ($A_d$, %) | Curability evaluation |
|---|---|---|---|---|---|---|
| | | $A_H$ | $A_L$ | $A_{R4}$ (%) | | |
| Example | 1 | 47 | 25.1 | 187.3 | 97.8 | PASS |
| | 2 | 54.5 | 17.8 | 306.2 | 99.1 | PASS |
| | 3 | 67.8 | 15.7 | 431.8 | 98.4 | PASS |
| | 4 | 42.5 | 16.8 | 253.0 | 95.6 | PASS |
| | 5 | 30.9 | 13.8 | 223.9 | 97 | PASS |
| | 6 | 25.3 | 9.7 | 260.8 | 97.5 | PASS |
| | 7 | 21.2 | 8.2 | 258.5 | 98.8 | PASS |
| | 8 | 35.8 | 28.8 | 124.3 | 99.3 | PASS |
| | 9 | 55.5 | 24.5 | 226.5 | 96.8 | PASS |
| | 10 | 71.8 | 13.8 | 520.3 | 97.5 | PASS |
| Comparative Example 1 | | 35.8 | 27.6 | 129.7 | 97.5 | PASS |

In Table 1, $A_1$, $A_7$ and $A_{R1}$ are as defined in Equation 1, $A_{60°C,1}$, $A_{60°C,7}$ and $A_{R2}$ are as defined in Equation 2, and $A_{R3}$ is as defined in Equation 3. In Table 2, $A_H$, $A_L$ and $A_{R4}$ are as defined in Equation 4, and the residual adhesion rate is as defined in Equation 5.

## Claims

1. A release composition comprising a polyorganosiloxane having a siloxane unit of Formula 1 below, a siloxane unit of Formula 2 below, and a siloxane unit of Formula 3 below:

[Formula 1] $(R^1_2SiO_{2/2})$

[Formula 2] $(R^1R^2SiO_{2/2})$

[Formula 3] $(R^3_2SiO_{2/2})$

wherein, $R^1$ is an alkyl group, $R^2$ is an alkenyl group, and $R^3$ is an aryl group.

2. The release composition according to claim 1, wherein a ratio of a total mole number of siloxane units of Formulas 1 to 3 relative to a total mole number of all siloxane units of the polyorganosiloxane is 85 mol% or more.

3. The release composition according to claim 1, wherein a ratio of a mole number of the siloxane unit of Formula 1 to a mole number of the siloxane unit of Formula 2 is in a range of 0.5 to 2,000.

4. The release composition according to claim 1, wherein a ratio of a mole number of the siloxane unit of Formula 1 to a mole number of the siloxane unit of Formula 3 is in a range of 0.5 to 2,000.

5. The release composition according to claim 1, wherein the polyorganosiloxane further contains one or more siloxane units selected from the group consisting of a siloxane unit of Formula 4 below and a siloxane unit of Formula 5 below:

[Formula 4] $(R^1{}_3SiO_{1/2})$

[Formula 5] $(R^2R^1{}_2SiO_{1/2})$

wherein, $R^1$ is an alkyl group and $R^2$ is an alkenyl group.

6. The release composition according to claim 1, wherein the polyorganosiloxane has an average unit of Formula 6 below:

[Formula 6] $R^1{}_aR^2{}_bR^3{}_cR^4{}_dSiO_{(4-a-b-c-d)/2}$

wherein, $R^1$ is an alkyl group, $R^2$ is an alkenyl group, $R^3$ is an aryl group, $R^4$ is an alkoxy group, a hydroxy group, or a monovalent hydrocarbon group, a is a number in a range of 0.6 to 2, b is a number in a range of 0.001 to 0.7, c is a number in a range of 0.001 to 1.4, and d is a number in a range of 0 to 0.5.

7. The release composition according to claim 1, wherein a ratio of a total mole number of trifunctional siloxane units and tetrafunctional siloxane units based on a mole number of all siloxane units included in the polyorganosiloxane is 10 mol% or less.

8. The release composition according to claim 1, wherein the polyorganosiloxane has a weight average molecular weight in a range of 20,000 g/mol to 2,000,000 g/mol.

9. The release composition according to claim 8, wherein the polyorganosiloxane has a polydispersity index in a range of 1 to 5.

10. The release composition according to claim 1, further comprising a curable silicone resin component.

11. The release composition according to claim 10, wherein the polyorganosiloxane is included in a ratio of 1 to 500 parts by weight relative to 100 parts by weight of the curable silicone resin component.

12. The release composition according to claim 10, wherein the curable silicone resin component comprises a polyorganosiloxane having an average unit of Formula 7 below and a polyorganosiloxane having an average unit of Formula 8 below:

[Formula 7] $P^2{}_cQ^2{}_dSiO_{(4-c-d)/2}$

wherein, $P^2$ is an alkenyl group, $Q^2$ is an alkoxy group, a hydroxy group, or a monovalent hydrocarbon group, c is a number in a range of 0.0001 to 0.1, and d is a number in a range of 1 to 4:

[Formula 8] $H_eQ^3{}_fSiO_{(4-e-f)/2}$

wherein, $Q^3$ is an alkoxy group, a hydroxy group, or a monovalent hydrocarbon group, e is a number in a range of 0.01 to 0.9, and f is a number in a range of 1 to 4.

**13.** The release composition according to claim 12, wherein the polyorganosiloxane of Formula 7 contains one or more siloxane units selected from the group consisting of a siloxane unit of Formula 9 below and a siloxane unit of Formula 10 below:

[Formula 9] $ViR^3{}_2SiO_{1/2}$

[Formula 10] $ViR^3SiO_{2/2}$

wherein, Vi is an alkenyl group, and $R^3$ is a hydroxy group, an alkoxy group, or a monovalent hydrocarbon group.

**14.** The release composition according to claim 12, wherein the polyorganosiloxane of Formula 8 contains a siloxane unit of Formula 11 below:

[Formula 11] $HR^4SiO_{2/2}$

wherein, $R^4$ is a hydroxy group, an alkoxy group, or a monovalent hydrocarbon group.

**15.** The release composition according to claim 12, wherein the polyorganosiloxane having the average unit of Formula 7 has a weight average molecular weight in a range of 100,000 g/mol to 1,000,000 g/mol, and the polyorganosiloxane having the average unit of Formula 8 has a weight average molecular weight in a range of 1,000 g/mol to 50,000 g/mol.

**16.** A release layer comprising the release composition of any one of claims 1 to 15 or a cured product thereof.

**17.** The release layer according to claim 16, satisfying at least one or more of Equations 1 to 5 below:

[Equation 1]

$$18 \geq A_{R1}=100X(|A_7- A_1|)/A_1$$

wherein, $A_1$ is a release peel force measured while maintaining a state where a pressure-sensitive adhesive layer is attached to the release layer at 25°C for 24 hours and then peeling the pressure-sensitive adhesive layer from the release layer at a peel angle of 180 degrees and a peel rate of 0.3 m/min, and at 25°C, and $A_7$ is a release peel force measured while maintaining a state where the pressure-sensitive adhesive layer is attached to the release layer at 25°C for 168 hours and then peeling the pressure-sensitive adhesive layer from the release layer at a peel angle of 180 degrees and a peel rate of 0.3 m/min, and at 25°C.

[Equation 2]

$$20 \geq A_{R2}=100X|A_{60°C,7}- A_{60°C,1}|/A_{60°C,1}$$

wherein, $A_{60°C,1}$ is a release peel force measured while maintaining a state where a pressure-sensitive adhesive layer is attached to the release layer at 60°C for 24 hours and then peeling the pressure-sensitive adhesive layer from the release layer at a peel angle of 180 degrees and a peel rate of 0.3 m/min, and at 25°C, and $A_{60°C,7}$ is a release peel force measured while maintaining a state where the pressure-sensitive adhesive layer is attached to the release layer at 60°C for 168 hours and then peeling the pressure-sensitive adhesive layer from the release layer at a peel angle of 180 degrees and a peel rate of 0.3 m/min, and at 25°C.

[Equation 3]

$$30 \geq A_{R3}=100X|A_{60°C,7}- A_1|/A_1$$

wherein, $A_1$ is a release peel force measured while maintaining a state where a pressure-sensitive adhesive layer is attached to the release layer at 25°C for 24 hours and then peeling the pressure-sensitive adhesive layer from the release layer at a peel angle of 180 degrees and a peel rate of 0.3 m/min, and at 25°C, and $A_{60°C,7}$ is a release peel force measured while maintaining a state where the pressure-sensitive adhesive layer is attached to the release layer

at 60°C for 168 hours and then peeling the pressure-sensitive adhesive layer from the release layer at a peel angle of 180 degrees and a peel rate of 0.3 m/min, and at 25°C.

[Equation 4]

$$150 \leq A_{R4}=100XA_H/A_L$$

wherein, $A_H$ is a release peel force measured while maintaining a state where a pressure-sensitive adhesive layer is attached to the release layer at 60°C for 24 hours and then peeling the pressure-sensitive adhesive layer from the release layer at a peel angle of 180 degrees and a peel rate of 30 m/min, and at 25°C, and $A_L$ is a release peel force measured while maintaining a state where the pressure-sensitive adhesive layer is attached to the release layer at 60°C for 24 hours and then peeling the pressure-sensitive adhesive layer from the release layer at a peel angle of 180 degrees and a peel rate of 0.3 m/min, and at 25°C.

[Equation 5]

$$80 \leq A_d=100 X A_f/A_i$$

wherein, $A_i$ is a release peel force measured while maintaining a state where a pressure-sensitive adhesive layer is attached to the release layer at 25°C for 24 hours and then peeling the pressure-sensitive adhesive layer from the release layer at a peel angle of 180 degrees and a peel rate of 0.3 m/min, and at 25°C, and Af is a release peel force measured while maintaining a state where the pressure-sensitive adhesive layer is attached to the release layer at 25°C for 24 hours again after the $A_i$ is measured, and then peeling the pressure-sensitive adhesive layer from the release layer at a peel angle of 180 degrees and a peel rate of 0.3 m/min, and at 25°C.

**18.** A release film comprising a base film and the release layer of claim 16 formed on one side or both sides of the base film.

**19.** A pressure-sensitive adhesive film comprising the release layer of claim 16; and a pressure-sensitive adhesive layer attached to the release layer.

## INTERNATIONAL SEARCH REPORT

International application No.
**PCT/KR2023/003797**

**A. CLASSIFICATION OF SUBJECT MATTER**

**C09D 183/04**(2006.01)i; **C09J 7/40**(2018.01)i; **C08G 77/20**(2006.01)i; **C08G 77/12**(2006.01)i; **C08L 83/06**(2006.01)i; **C08K 5/56**(2006.01)i

According to International Patent Classification (IPC) or to both national classification and IPC

**B. FIELDS SEARCHED**

Minimum documentation searched (classification system followed by classification symbols)

C09D 183/04(2006.01); C08G 77/00(2006.01); C08G 77/08(2006.01); C08G 77/12(2006.01); C08J 3/03(2006.01); C08J 7/046(2020.01); C09D 175/04(2006.01); C09J 7/20(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 실록산 단위 (siloxane unit), 이형 조성물 (release composition), 폴리오가노실록산 (polyorganosiloxane), 이형 필름 (release film)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0082456 A (SHIN-ETSU CHEMICAL CO., LTD.) 05 July 2021 (2021-07-05)<br>See claims 1, 3 and 4; and paragraphs [0071], [0080], [0081], [0092]-[0095], [0115] and [0116]. | 1-19 |
| X | KR 10-2019-0066024 A (SHIN-ETSU CHEMICAL CO., LTD.) 12 June 2019 (2019-06-12)<br>See claims 1-4; and paragraphs [0015]-[0017], [0054], [0055] and [0069]-[0079]. | 1-19 |
| X | KR 10-2018-0120978 A (TORAY ADVANCED MATERIALS KOREA INC.) 07 November 2018 (2018-11-07)<br>See claims 1-9; and paragraphs [0045]-[0048]. | 1-19 |
| X | EP 2112191 A1 (SHIN-ETSU CHEMICAL CO., LTD.) 28 October 2009 (2009-10-28)<br>See claims 1 and 10. | 1-19 |
| A | KR 10-2022-0013380 A (DOW SILICONES CORPORATION et al.) 04 February 2022 (2022-02-04)<br>See claims 1-6, 10 and 15. | 1-19 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 June 2023** | **28 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/003797**

| Patent document cited in search report | | | Publication date (day/month/year) | Patent family member(s) | | | Publication date (day/month/year) |
|---|---|---|---|---|---|---|---|
| KR | 10-2021-0082456 | A | 05 July 2021 | CN | 112912443 | A | 04 June 2021 |
| | | | | EP | 3875542 | A1 | 08 September 2021 |
| | | | | EP | 3875542 | A4 | 14 September 2022 |
| | | | | JP | 2020-070311 | A | 07 May 2020 |
| | | | | JP | 7074642 | B2 | 24 May 2022 |
| | | | | TW | 202028311 | A | 01 August 2020 |
| | | | | US | 2021-0355324 | A1 | 18 November 2021 |
| | | | | WO | 2020-090209 | A1 | 07 May 2020 |
| KR | 10-2019-0066024 | A | 12 June 2019 | CN | 109863219 | A | 07 June 2019 |
| | | | | EP | 3524655 | A1 | 14 August 2019 |
| | | | | EP | 3524655 | A4 | 03 June 2020 |
| | | | | JP | 2018-059001 | A | 12 April 2018 |
| | | | | TW | 201829622 | A | 16 August 2018 |
| | | | | US | 2020-0048508 | A1 | 13 February 2020 |
| | | | | WO | 2018-066448 | A1 | 12 April 2018 |
| KR | 10-2018-0120978 | A | 07 November 2018 | KR | 10-1942897 | B1 | 28 January 2019 |
| EP | 2112191 | A1 | 28 October 2009 | EP | 2112191 | B1 | 29 October 2014 |
| | | | | JP | 2009-263467 | A | 12 November 2009 |
| | | | | JP | 5296412 | B2 | 25 September 2013 |
| KR | 10-2022-0013380 | A | 04 February 2022 | CN | 113874454 | A | 31 December 2021 |
| | | | | CN | 113874454 | B | 23 May 2023 |
| | | | | EP | 3973025 | A1 | 30 March 2022 |
| | | | | EP | 3973025 | A4 | 08 February 2023 |
| | | | | JP | 2022-541871 | A | 28 September 2022 |
| | | | | TW | 202043396 | A | 01 December 2020 |
| | | | | US | 2022-0186086 | A1 | 16 June 2022 |
| | | | | WO | 2020-232629 | A1 | 26 November 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220035335
- JP 2011052207 A